(19) Europäisches Patentamt / European Patent Office / Office européen des brevets

(11) EP 2 241 536 A1

(12) **EUROPEAN PATENT APPLICATION**
published in accordance with Art. 153(4) EPC

(43) Date of publication:
20.10.2010 Bulletin 2010/42

(21) Application number: 09700895.7

(22) Date of filing: 06.01.2009

(51) Int Cl.:
*C01G 23/00* (2006.01)          *C04B 35/443* (2006.01)
*C04B 35/46* (2006.01)

(86) International application number:
PCT/JP2009/050041

(87) International publication number:
WO 2009/087997 (16.07.2009 Gazette 2009/29)

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 09.01.2008 JP 2008001934

(71) Applicant: Sumitomo Chemical Company, Limited
Tokyo 104-8260 (JP)

(72) Inventors:
• MAKI, Hajime
Tsukuba-shi
Ibaraki (JP)
• TOHMA, Tetsuro
Niihama-shi
Ehime 792-0002 (JP)
• NARUMI, Masayuki
Niihama-shi
Ehime 792-0811 (JP)

(74) Representative: Vossius & Partner
Siebertstrasse 4
81675 München (DE)

(54) **PROCESS FOR PRODUCTION OF ALUMINUM TITANATE-BASED CERAMICS**

(57) The invention is for obtaining aluminium titanate-based ceramics having a small BET specific surface area and having, when ground into powder, a small pore volume, by effective utilization of particulate aluminium titanate-based ceramics. A pre-mixture prepared by mixing a particulate aluminium titanate-based ceramics with a titania source and an alumina source and optionally further with a magnesia source and a silica source, or particulates of aluminium titanate-based ceramics is, as such or preferably after shaped, fired as the powder or as the molded body to produce an aluminium titanate-based ceramics.

EP 2 241 536 A1

**Description**

TECHNICAL FIELD

The present invention relates to aluminium titanate-based ceramics such as typically aluminium titanate or aluminium magnesium titanate, and a process for producing them. In particular, the invention relates to a process for producing aluminium titanate-based ceramics by re-firing particulate aluminium titanate-based ceramics, which is conventionally classified and disposed after firing, for effectively utilizing them.

BACKGROUND ART

Aluminium titanate-based ceramics are known as ceramics excellent in heat resistance, and for example, Patent Reference 1 (WO2005/105704) discloses a process of mixing powdery titania source and alumina source and firing the resulting pre-mixture. Aluminium titanate-based ceramics obtained according to said process are generally massive, but may be ground into powder. The resulting powder of aluminium titanate-based ceramics may be converted into a paste with a liquid component such as water added thereto, and then can be molded according to an extrusion method or the like. Preferably, the powder of aluminium titanate-based ceramics to be shaped has a small pore volume. And the titanate ceramic -based ceramics has a small BET specific surface area.

However, aluminium titanate-based ceramics easily form fine particles by grinding, and therefore the powder of aluminium titanate-based ceramics obtained by grinding contains many fine particulate components. Accordingly, the powder of aluminium titanate-based ceramics after ground is generally classified by sieving to remove the fine particulate aluminium titanate-based ceramics, and then molded. The removed particulate aluminium titanate-based ceramics could not be molded as they are, and are all useless.

DISCLOSURE OF THE INVENTION

PROBLEMS THAT THE INVENTION IS TO SOLVE

Accordingly, the inventors have diligently studied for effectively utilizing particulate aluminium titanate-based ceramics and, as a result, have found that, when they are fired as they are, or when mixed with a titania source, an alumina source and a magnesia source to give a pre-mixture, and fired, then massive aluminium titanate-based ceramics can be again obtained, and have reached the present invention.

MEANS FOR SOLVING THE PROBLEMS

The invention achieving the above-mentioned object is a process for producing aluminium titanate-based ceramics, comprising firing a particulate aluminium titanate-based ceramics or shaping a particulate aluminium titanate-based ceramics to give a preform and firing the resulting preform.

The invention also includes a process for producing aluminium titanate-based ceramics, comprising mixing a particulate aluminium titanate-based ceramics with a titania source and an alumina source to give a pre-mixture, optionally shaping the pre-mixture, and firing the resulting pre-mixture. Preferably, the particulate aluminium titanate-based ceramics is further mixed with a magnesia source and/or a silica source, in addition to the titania source and the alumina source, to give a pre-mixture. The silica source is preferably feldspar or glass frit.

In the above production process, the maximum particle size of the particulate aluminium titanate-based ceramics is preferably at most 40 $\mu$m. Also preferably, the value D50 of the particle size distribution of the particulate aluminium titanate-based ceramics is at most 20 $\mu$m, and the value D90 thereof is at most 40 $\mu$m.

The particulate aluminium titanate-based ceramics may contain magnesia and/or silica.

The invention also includes an aluminium titanate -based ceramics having a BET specific surface area of at most 0.4 $m^2$/g.

The invention also includes a process for producing a powder of aluminium titanate-based ceramics, comprising grinding the aluminium titanate-based ceramics obtained according to any of the above-mentioned production process or the aluminium titanate-based ceramics having a BET specific surface area of at most 0.4 $m^2$/g.

The invention also includes a powder of aluminium titanate-based ceramics having a pore volume of at most $3.0 \times 10^{-3}$ $cm^3$/g.

EFFECT OF THE INVENTION

According to the production process of the invention, a massive aluminium titanate-based ceramics can be obtained from a powder of particulate aluminium titanate-based_ceramics.

According to the production process of the invention, an aluminium titanate-based ceramics having a small BET surface area can be obtained. Grinding this into powder provides a powder of aluminium titanate-based ceramics having a small pore volume.

BEST MODE FOR CARRYING OUT THE INVENTION

The particulate aluminium titanate-based ceramics to be applied to the production process of the invention is a fine powder of an aluminium titanate-based ceramics. Its maximum particle size is generally at most 60 $\mu$m, preferably at most 40 $\mu$m; and the mass-based 10% diameter (D 10) determined by cumulative frequency distribution is generally at least 0.1 $\mu$m, preferably at least 0.5 $\mu$m. Also preferred is use of the powder having a value D50 of at most 20 $\mu$m, and a value D90 of at most 40 $\mu$m.

The composition of the particulate aluminium titanate-based ceramics is determined by the data as calculated in terms of titania [$TiO_2$], alumina [$Al_2O_3$] and other constitutive metals as oxides. Relative to the total, 100 parts by mass, of the titanium content as titania, the aluminium content as alumina and the other metal content of the other constitutive metals as metal oxides, in general, the titanium content as titania is from 20 parts by mass to 60 parts by mass, and the aluminium content as alumina is from 30 parts by mass to 70 parts by mass. Preferably, the titanium content as titania is from 30 parts by mass to 50 parts by mass, and the aluminium content as alumina is from 40 parts by mass to 60 parts by mass.

The composition of the particulate aluminium titanate-based ceramics may contain magnesium, and in this case, the magnesium content as magnesia is generally from 0.1 parts by mass to 10 parts by mass relative to 100 parts by mass of the above-mentioned total content, preferably from 0.5 parts by mass to 5 parts by mass.

The aluminium titanate conversion ratio (AT conversion ratio) of the particulate aluminium titanate-based ceramics is preferably approximately from 70 to 100 %. The AT conversion ratio is described in Examples to be given hereinunder.

The composition of the particulate aluminium titanate-based ceramics may contain silicon, and in this case, the silicon content as silica is generally from 0.1 parts by mass to 20 parts by mass relative to 100 parts by mass of the above-mentioned total content, preferably from 0.5 parts by mass to 10 parts by mass, more preferably from part by mass to 5 parts by mass. The particulate aluminium titanate-based ceramics may contain inevitable impurities derived from raw materials or contaminant mixed in production steps.

The particulate aluminium titanate-based ceramics were conbentionally classified and disposed after firing. In the invention, the particulate aluminium titanate-based ceramics_may be re-fired and efficiently utilized. Specifically, the production process for aluminium titanate-based ceramics of the invention comprises a step of firing the particulate aluminium titanate-based ceramics directly as such, or preferably comprises a step of mixing the particulate ceramic with a titania source and an alumina source to give a pre-mixture and firing the resulting pre-mixture. Preferably, the particulate aluminium titanate-based ceramics is further mixed with a magnesia source and/or a silica source, in addition to the titania source and the alumina source, to give a pre-mixture, and the resulting pre-mixture is fired. Also preferably, the particulate aluminium titanate-based ceramics itself or the above-mentioned pre-mixture is shaped into a preform, and the resulting preform is fired.

The titania source is a compound capable of being a titanium ingredient to constitute the aluminium titanate-based ceramics. For example, mentioned is titanium oxide. Titanium oxide includes, for example, titanium(IV) oxide, titanium(III) oxide, titanium(II) oxide, etc. Preferred is titanium(IV) oxide. The crystal type of titanium(IV) oxide includes an anatase type, a rutile type, a brookite type, etc., and may be amorphous. More preferred are an anatase type and a rutile type.

The titania source may be a powder of a compound to be led to titania (titanium oxide) by firing alone in air. The compound includes, for example, titanium salt, titanium alkoxide, titanium hydroxide, titanium nitride, titanium sulfide, titanium metal, etc.

The titanium salt concretely includes titanium trichloride, titanium tetrachloride, titanium(IV) sulfide, titanium (VI) sulfide, titanium(IV) sulfate, etc. The titanium alkoxide concretely includes titanium(IV) ethoxide, titanium(IV) methoxide, titanium(IV) t-butoxide, titanium(IV) isobutoxide, titanium(IV) n-propoxide, titanium(IV) tetraisopropoxide, and their chelate compounds, etc.

In the invention, only one of the titania source may be used, or two or more thereof may be used as combined.

The titania source is preferably titanium oxide. The titania source may contain inevitable impurities derived from raw materials or contaminant mixed in production steps.

The alumina source is a compound capable of being an aluminium ingredient to constitute the aluminium titanate-based ceramics. For example, mentioned is a powder of alumina (aluminium oxide). The crystal type of alumina includes a $\gamma$ type, a $\delta$ type, a $\theta$ type, an $\alpha$ type, etc., and may be amorphous. As the alumina, preferred is an $\alpha$-type alumina.

The alumina source may be a compound to be led to alumina by firing alone in air. The compound includes, for example, aluminium salt, aluminium alkoxide, aluminium hydroxide, aluminium metal, etc.

The aluminium salt may be an inorganic salt with an inorganic acid, or an organic salt with an organic acid. The aluminium inorganic salt concretely includes, for example, nitrates with aluminium such as aluminium nitrate, ammonium aluminium nitrate; and carbonates with aluminium such as ammonium aluminium carbonate, etc. The aluminium organic salt includes, for example, aluminium oxalate, aluminium acetate, aluminium stearate, aluminium lactate, aluminium laurate, etc.

The aluminium alkoxide concretely includes, for example, aluminium isopropoxide, aluminium ethoxide, aluminium sec-butoxide, aluminium tert-butoxide, etc.

The crystal type of aluminium hydroxide includes, for example, a gibbsite type, a bayerite type, a norstrandite type, a boehmite type, a pseudo-boehmite type, etc, and may be amorphous. Amorphous aluminium hydroxide includes, for example, an aluminium hydrolyzate to be obtained by hydrolysis of an aqueous solution of a water-soluble aluminium compound such as aluminium salt, aluminium alkoxide, etc.

In the invention, only one of the alumina source may be used, or two or more thereof may be used as combined.

The alumina source is preferably alumina. The alumina source may contain inevitable impurities derived from raw materials or contaminant mixed in production steps.

The magnesia source is a compound capable of being a magnesium ingredient to constitute the aluminium titanate-based ceramics. For example, mentioned is a powder of magnesia (magnesium oxide).

The magnesia source may be a compound to be led to magnesia by firing alone in air. The compound includes, for example, magnesium salt, magnesium alkoxide, magnesium hydroxide, magnesium nitride, magnesium metal, etc.

The magnesium salt concretely includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, magnesium benzoate, etc.

The magnesium alkoxide concretely includes magnesium methoxide, magnesium ethoxide, etc.

As the magnesia source, usable is a compound serving also as a magnesia source and an alumina source. Such compound includes, for example, magnesia spinel ($MgAl_2O_4$). In the invention, only one of the magnesia source may be used or two or more thereof may be used as combined. The magnesia source may contain inevitable impurities derived from raw materials or contaminant mixed in production steps.

In case where a titania source and an alumina source and preferably further a magnesia source are used, in general, they are powdery; and their amount to be used may be determined by the calculated result in terms of titania [$TiO_2$], alumina [$Al_2O_3$] and magnesia [$MgO$].

In case where a titania source and an alumina source are used, the amount of the titania source to be used, as titania, is generally from 20 parts by mass to 70 parts by mass relative to the total, 100 parts by mass, of the amount of titania to be used as titania and the amount of alumina to be used as alumina, preferably from 30 parts by mass to 60 parts by mass.

In case where a titania source and an alumina source and further a magnesia source are used, in general, the amount of the titania source to be used, as titania, is from 20 parts by mass to 60 parts by mass, the amount of the alumina source to be used, as alumina, is from 30 parts by mass to 70 parts by mass, and the amount of the magnesia source to be used, as magnesia, is from 0.1 parts by mass to 10 parts by mass, relative to the total, 100 parts by mass, of the amount of titania to be used as titania, the amount of alumina to be used as alumina, and the amount of magnesia to be used as magnesia. Preferably, the amount of the titania source to be used, as titania, is from 30 parts by mass to 55 parts by mass, the amount of the alumina source to be used, as alumina, is from 35 parts by mass to 60 parts by mass, and the amount of the magnesia source to be used, as magnesia, is from 0.5 parts by mass to 10 parts by mass.

The total amount of the titania source, the alumina source, and the magnesia source to be preferably used, is generally from 0.1 times by mass to 100 times by mass as much as the amount of the particulate aluminium titanate-based ceramics to be used, preferably from 0.1 times by mass to 20 times by mass, more preferably from 0.2 times by mass to 10 times by mass.

In the production process of the invention, a particulate aluminium titanate-based ceramics is mixed with a titania source and an alumina source and preferably with a magnesia source to give a pre-mixture, further may be mixed with a silica source. The aluminium titanate-based ceramics obtained by mixing with a silica source is excellent in the mechanical strength and the heat resistance.

The silica source is a compound to be in the aluminium titanate-based ceramics as a silicon ingredient therein, and includes, for example, silicon oxide (silica) such as silicon dioxide, silicon monoxide, etc.

As the silica source, a powder of a compound, which is capable of being led to silica by firing alone in air, also can be used. The compound includes, for example, silicic acid, silicon carbide, silicon nitride, silicon sulfide, silicon tetrachloride, silicon acetate, sodium silicate, sodium orthosilicate, glass frit, etc. Preferred are glass frit and the like, from the viewpoint of industrial availability.

As the silica source, also usable is a compound serving as an alumina source. Such compound includes, for example, feldspar.

In the invention, one of the silica source may be used, or two or more thereof may be used as combined.

In case where a silica source is used, generally used is a powdery one, and its amount to be used may be determined by calculated result in terms of silica $[SiO_2]$. In general, the amount is from 0.1 parts by mass to 20 parts by mass relative to the total, 100 parts by mass, of the amount of the titania source to be used as titania $[TiO_2]$, the amount of the alumina source to be used as alumina $[Al_2O_3]$ and the amount of the magnesia source to be used as magnesia $[MgO]$, preferably from 0.5 parts by mass to 10 parts by mass, more preferably from 1 part by mass to 5 parts by mass. The silica source may contain inevitable impurities derived from raw materials or contaminant mixed in production steps.

In the production process of the invention, preferably, such a particulate aluminium titanate-based ceramics is mixed with a titania source and an alumina source and preferably further with a magnesia source and a silica source to give a pre-mixture. The mixing may be in dry or in wet. The mixing order is not specifically defined. A particulate aluminium titanate-based ceramics may be mixed with a titania source and an alumina source and preferably further with a magnesia source and a silica source all at a time; or a titania source and an alumina source and preferably a magnesia source and a silica source are mixed to give a mixture, and the mixture may be then further mixed with a particulate aluminium titanate-basted ceramics.

In dry mixing, for example, a particulate aluminium titanate-based ceramics, a titania source and an alumina source, and preferably further a magnesia source and a silica source may be mixed, not dispersed in a solvent; and in general, they may be mixed by stirring and grinding along with grinding media in a grinding container.

As the grinding container, generally used is one formed of a metal material such as stainless steel or the like; and its inner surface may be coated with a fluororesin, a silicone resin, an urethane resin or the like. The inner capacity of the grinding container may be generally from 1 time by volume to 4 times by volume as much as the total volume of the starting powder and the grinding media, preferably from 1.2 times by volume to 3 times by volume.

As the grinding media, for example, usable are alumina beads, zirconia beads and the like having a diameter of from 1 mm to 100 mm, preferably from 5 mm to 50 mm. The amount of the grinding media to be used may be generally from 1 time by mass to 1000 times by mass, preferably from 5 times by mass to 100 times by mass as much as the total amount of the starting materials, or that is, the particulate aluminium titanate-based ceramics, the titania source, the alumina source and preferably further the magnesia source and the silica source to be used.

The grinding may be attained, for example, by putting the starting materials and the grinding media into a grinding container and then vibrating or rotating the grinding container. By vibrating or rotating the grinding container, the starting materials may be stirred and mixed with the grinding media therein, and thus ground. For vibrating or rotating the grinding container, for example, usable are ordinary grinding machines such as a vibration mill, a ball mill, a planetary mill, a pin mill, e.g., a high-speed rotating_grinder or the like. From the viewpoint of industrial operation, preferred is a vibration mill. In case where the grinding container is vibrated, its vibration amplitude may be generally from 2 mm to 20 mm, preferably at most 12 mm. The grinding may be attained by continuous process or by batch process; but from the viewpoint of industrial operation, continuous process is preferred.

The time to be taken for grinding may be generally from 1 minute to 6 hours, preferably from 1.5 minutes to 2 hours.

In grinding the starting materials in dry, additives such as a grinding aid, a deflocculant and the like may be added thereto.

The grinding aid includes, for example, alcohols such as methanol, ethanol, propanol; glycols such as propylene glycol, polypropylene glycol, ethylene glycol; amines such as triethanolamine; higher fatty acids such as palmitic acid, stearic acid, oleic acid; carbon materials such as carbon black, graphite, etc. One or more of these may be used either singly or as combined.

In case where the additives are used, the total amount thereof to be used may be generally from 0.1 parts by mass to 10 parts by mass relative to the total amount, 100 parts by mass, of the particulate aluminium titanate-based ceramics, the titania source and the alumina source and preferably further the magnesia source and the silica source to be used, preferably from 0.5 parts by mass to 5 parts by mass, more preferably from 0.75 parts by mass to 2 parts by mass.

On the other hand, in wet mixing, for example, the starting materials may be mixed and dispersed in a liquid medium. Regarding the mixing mode, the starting materials may be simply stirred in an ordinary liquid medium, or may be stirred along with grinding media in a grinding container.

As the grinding container, generally used is one formed of a metal material such as stainless steel or the like; and its inner surface may be coated with a fluororesin, a silicone resin, an urethane resin or the like. The inner capacity of the grinding container may be generally from 1 time by volume to 4 times by volume as much as the total volume of the starting material mixture and the grinding media, preferably from 1.2 times by volume to 3 times by volume.

In wet mixing, water is generally used as a solvent. As containing few impurities, preferred is ion-exchanged water. As the solvent, however, any others than this may also be used. For example, organic solvents are usable, including alcohols such as methanol, ethanol, butanol, propanol; glycols such as propylene glycol, polypropylene glycol, ethylene glycol, etc. The amount of the solvent to be used may be generally from 20 parts by mass to 1000 parts by mass relative to 100 parts by mass of the starting material mixture to be used, preferably from 30 parts by mass to 300 parts by mass.

As the grinding media, for example, usable are alumina balls, zirconia balls and the like having a diameter of from 1 mm to 100 mm, preferably from 5 mm to 50 mm. The amount of the grinding media to be used may be generally from 1 time by mass to 1000 times by mass as much as the amount of the starting material mixture to be used, preferably from 5 times by mass to 100 times by mass.

In grinding the starting material mixture in wet, a grinding aid may be added thereto. The grinding may be attained, for example, by putting the starting material mixture and the grinding media into a grinding container and then vibrating and/or rotating the grinding container. By vibrating or rotating the grinding container, the starting material mixture may be stirred and mixed with the grinding media therein, and thus ground. For vibrating or rotating the grinding container, for example, usable are ordinary grinding machines such as a vibration mill, a ball mill, a planetary mill or the like. From the viewpoint of industrial operation, preferred is a vibration mill. In case where the grinding container is vibrated, its vibration amplitude may be generally from 2 mm to 20 mm, preferably at most 12 mm. The grinding may be attained by continuous process or by batch process; continuous process is preferred from the viewpoint of industrial operation.

In wet mixing, a dispersant may be added to the solvent. The dispersant includes, for example, inorganic acids such as nitric acid, hydrochloric acid, sulfuric acid; organic acids such as oxalic acid, citric acid, acetic acid, malic acid, lactic acid; alcohols such as methanol, ethanol, propanol; surfactants such as ammonium polycarboxylate, etc. In case where the dispersant is used, its amount to be used may be generally from 0.1 parts by mass to 20 parts by mass relative to 100 parts by mass of the solvent, preferably from 0.2 parts by mass to 10 parts by mass.

After the mixing, the solvent is removed to give the above-mentioned, uniformly mixed mixture. In general, the solvent removal may be attained by solvent vaporization.

The solvent removal may be attained by drying in air at room temperature, or by drying in vacuum, or by drying under heat. The drying method may be static drying or fluidized drying. The temperature in drying under heat is not specifically defined, but may be generally from 50°C to 250°C. The device to be used for the drying under heat includes, for example, a shelf drier, a slurry drier, a spray drier, etc.

In wet mixing, even though some alumina source and the like may dissolve in the solvent, the alumina source and the like dissolved in the solvent may again precipitate to be a solid through solvent evaporation.

In that manner, a pre-mixture is prepared by mixing a particulate aluminium titanate-based ceramics, a titania source and an alumina source and preferably further a magnesia source and a silica source; and the pre-mixture is led into an aluminium titanate-based ceramics by firing. The titania source, the alumina source, the magnesia source and the silica source are generally powdery and contained in the pre-mixture.

Further, the powdery pre-mixture may be molded, and then the preform may be fired. Firing the preform may promote the formation of aluminium titanate-based ceramics. The shaping machine to be used for shaping includes a uniaxial extruder, a uniaxial press, a tabletter, a granulator, etc.

Using a uniaxial extruder, the pre-mixture may be shaped after a pore-forming agent, a binder, a lubricant, a plasticizer, a dispersant, a solvent and the like are added thereto.

The pore-forming agent includes, for example, carbon materials such as graphite; resins such as polyethylene, polypropylene, polymethyl methacrylate; vegetable materials such as starch, nutshell, walnut shell, corn; ice, dry ice, etc.

The binder includes, for example, celluloses such as methyl cellulose, carboxymethyl cellulose, sodium carboxymethyl cellulose; alcohols such as polyvinyl alcohol; salts such as lignin sulfonate salt; waxes such as paraffin wax, microcrystalline wax; thermoplastic resins such as EVA, polyethylene, polystyrene, liquid-crystalline polymer, engineering plastics, etc. Some substances may serve both as a pore-forming agent and a binder. This substances are capable of acting to adhere the particles to each other in shaping to thereby keep the molded body, and capable of being fired away in the subsequent firing step to form pores. The substances concretely include polyethylene etc.

The lubricant includes, for example, alcoholic lubricants such as glycerin; higher fatty acids such as caprylic acid, lauric acid, palmitic acid, alaginic acid, oleic acid, stearic acid; metal stearates such as aluminium stearate, etc. The lubricant generally functions also as a plasticizer.

As the solvent, generally used is ion-exchanged water, as well as alcohols such as methanol, ethanol, etc.

The firing temperature in firing the pre-mixture is generally not lower than 1300°C, preferably not lower than 1400°C. From the viewpoint that the obtained aluminium titanate-based ceramics can be easily ground, the temperature is generally not higher than 1600°C, preferably not higher than 1550°C. Not specifically defined, the heating rate up to the firing temperature may be generally from 1°C/hr to 500°C/hr. For improving the uniformity, the same temperature may be kept during the firing process.

The pre-mixture is fired generally in the air. On the contrary, depending on the type and the blend ratio of the starting material powder (the type and the blend ratio of the titania source and the alumina source and preferably further the magnesia source and the silica source) to be used, the pre-mixture is fired in an inert gas such as nitrogen gas, argon gas or the like, or in a reducing gas such as carbon monoxide gas, hydrogen gas or the like. The water vapor partial pressure in the atmosphere may be reduced in firing.

The pre-mixture is fired normally using an ordinary firing furnace such as a tubular electric furnace, a boxy electric furnace, a tunnel furnace, a far-IR furnace, a microwave heating furnace, a shaft furnace, a reverberating furnace, a rotary furnace, a roller hearth furnace, etc. The firing may be attained by batch process or continuous process, and may be attained in a static mode or a fluidized mode.

The requiring time for the firing may be a time enough for transition of the pre-mixture into an aluminium titanate-based ceramics, for example, from 10 minutes to 24 hours, depending on the amount of the pre-mixture, the type of the firing furnace, the firing temperature, the firing atmosphere and others.

In that manner, the intended aluminium titanate-based ceramics can be obtained as a fired product. The fired product is obtained generally as a massive body.

The fired aluminium titanate-based ceramics obtained according to the production process of the invention has a small BET specific surface area of at most 0.4 m$^2$/g. The BET specific surface area as referred to herein is a specific surface area determined according to a BET 1-point determination method. Ceramics having a small BET specific surface area have a small meso pore volume; and therefore, the increase in the strength of the ceramics themselves and the improvement in the shrinkage before and after heat treatment in firing the molded body of the ceramic can be expected. Thus obtained, the sintered body of the aluminium titanate-based ceramics may contain inevitable impurities derived from starting materials or contaminant mixed in production steps.

Further, by grinding the fired product of the massive aluminium titanate-based ceramics, a powder of aluminium titanate-based ceramics may also be obtained. The grinding may be attained, for example, by using an ordinary grinding machine such as a hand grinder, a mortar, a ball mill, a vibration mill, a planetary mill, a media-assisted stirring mill, a pin mill, a jet mill, a hammer mill, a roll mill, etc. The powder of aluminium titanate-based ceramics obtained by grinding may be classified according to an ordinary method.

Thus obtained, the powder of aluminium titanate-based ceramics may contain fine particles formed in grinding, but the particles may be removed by classification according to a method of sieving or the like. Further, after a liquid such as water is added to form a paste, and this may be molded according to an ordinary method such as an extrusion method of extruding and molding the paste through a die.

Thus obtained, the powder of aluminium titanate-based ceramics has a small pore volume of at most $3.0 \times 10^{-3}$ cm$^3$/g. The pore volume as referred to herein is a pore volume determined according to an ordinary mercury intrusion method. For the ceramic powder having a small pore volume, the improvement in the shrinkage before and after heat treatment in firing the molded body of the powder can be expected. Thus obtained, the powder of aluminium titanate-based ceramics may contain inevitable impurities derived from starting materials or contaminant mixed in production steps.

EXAMPLES

The invention is described in detail with reference to the following Examples; however, the invention should not be limited by such Examples.

The aluminium titanate conversion ratio [AT conversion ratio] of the aluminium titanate-based ceramics obtained in each Example was computed from the integrated intensity (IT) of the peak [corresponding to the titania-rutile phase (110) face] appearing at the position of 2θ = 27.4° in a powder X-ray diffraction spectrum, and the integrated intensity ($I_{AT}$) of the peak [corresponding to the aluminium titanate phase (230) face and the aluminium magnesium titanate phase (230) face] appearing at the position of 2θ = 33.7°, according to the formula (1):

$$\text{AT Conversion Ratio (\%)} = 100 \times I_{AT}/(I_{AT} + I_T) \qquad (1)$$

The morphology of the aluminium titanate-based ceramics was confirmed with a scanning electromicroscope [SEM]. The median particle size was determined as the mass-based 50 % diameter (D50) determined by cumulative frequency distribution, using a laser diffractiometric particle sizer [Nikkiso's Microtrac HRA(X-100)]. At the same time, the mass-based 90 % diameter (D90) determined by cumulative frequency distribution was also determined.

Example 1:

As a particulate aluminium titanate-based ceramics, aluminium magnesium titanate was ground, and led to pass through a sieve having an opening of 33 μm to give 5 g of an aluminium magnesium titanate powder having a maximum particle size of 33 μm, a median particle size (D50) of 16.3 μm and a mass-based 90 % diameter (D90) determined by cumulative frequency distribution of 29.1 μm [having a composition of 39 % by mass of TiO$_2$, 56 % by

mass of $Al_2O_3$ and 1.4 % by mass of MgO]. The aluminium magnesium titanate powder was put into an alumina-made grinding container [inner capacity 3.3 L], along with 17.6 g of titanium(IV) oxide powder [DuPont's "R-900"], 24.3 g of α-alumina powder [Sumitomo Chemical's "AES-12"], 1.4 g of magnesium carbonate powder [Konoshima Chemical's "Kinboshi"], 1.6 g of powdery feldspar [Ohira feldspar obtained from Tokushu Seiko, Lot No. "SS-300", having a silicon content, as $SiO_2$, of 67.1 % by mass and an aluminium content, as $Al_2O_3$, of 18.1 % by mass] and 5 kg of alumina beads [having a diameter of 15 mm]. The total volume of those particulate aluminium magnesium titanate, titanium oxide powder, α-alumina powder, magnesium carbonate and feldspar was about 50 $cm^3$. Next, the grinding container was vibrated with a vibration mill at an amplitude of 5.4 mm and a vibration frequency of 1760 times/min, and at a driving power of 5.4 kW for 2 minutes thereby grinding and mixing the mixture in the grinding container to give a pre-mixture.

5 g of the pre-mixture was put into an alumina-made crucible, then heated up to 1450°C in air in a boxy electric furnace at a heating rate of 300°C/hr, and kept at the temperature for 4 hours to be fired. Next, this was left cooled to room temperature to give a fired body. The fired body was ground in a mortar to give a powder. The powder was analyzed through powder X-ray diffractiometry for the powdery diffaraction spectrum, showing a crystal peak of aluminium titanate-based ceramics. The AT conversion ratio of the powder was computed and was 100 %. The morphology of the powder was cheeked with SEM, and almost all the particles constituting the powder were almost spherical.

Example 2:

As a particulate aluminium titanate-based ceramics, aluminium titanate was ground, and led to pass through a sieve having an opening of 33 μm to give 2000 g of an aluminium titanate powder having a maximum particle size of 33 μm, a median particle size (D50) of 16.3 μm and a mass-based 90 % diameter (D90) determined by cumulative frequency distribution of 29.1 μm [having a composition of 39 % by mass of $TiO_2$, 56 % by mass of $Al_2O_3$ and 1.4 % by mass of MgO]. The particulate aluminium titanate-based ceramics was put into an alumina-made grinding container [inner capacity 50 L], along with 3193 g of titanium oxide powder [DuPont's "R-900"], 4393 g of α-alumina powder [primary particle size 4 μm, secondary particle size 80 um], 124 g of magnesia powder [Ube Material's "UC-95M") and 291 g of powdery feldspar [Ohira feldspar obtained from Tokushu Seiko, Lot No. "SS-300"] and 80 kg of alumina beads [having a diameter of 15 mm]. The total volume of those titanium oxide powder, α-alumina powder, magnesia powder and feldspar was about 10000 $cm^3$. Next, the container was vibrated with a vibration mill at an amplitude of 10 mm and a vibration frequency of 1200 times/min, and at a driving power of 5.5 kW for 30 minutes thereby grinding the mixture in the grinding container to give a pre-mixture. 5 g of the pre-mixture was put into an alumina-made crucible, then heated up to 1500°C in air in a boxy electric furnace at a heating rate of 300°C/hr, and kept at the temperature for 4 hours to be fired. Next, this was left cooled to room temperature to give a fired body. The BET specific surface area of the fired body was 0.29 $m^2$/g. The fired body was ground to give an aluminium titanate powder. The pore volume of the obtained aluminium magnesium titanate powder was 2.9 × $10^{-3}$ $cm^3$/g. The X-ray diffraction spectrum of the powder obtained herein showed a crystal peak of aluminium magnesium titanate.

Comparative Example 1:

3991 g of titanium oxide powder [DuPont's "R-900"], 5491 g of α-alumina powder [primary particle size 4 μm, secondary particle size 80 μm], 154 g of magnesia powder [Ube Material's "UC-95M"] and 364 g of powdery feldspar (Ohira feldspar obtained from Tokushu Seiko, Lot No. "SS-300"] were put into an alumina-made grinding container [inner capacity, 50 L] along with 80 kg of alumina beads [having a diameter of 15 mm]. The total volume of the mixture of those titanium oxide powder, α-alumina powder and feldspar was about 10000 $cm^3$. Next, the container was vibrated with a vibration mill at an amplitude of 10 mm and a vibration frequency of 1200 times/min, and at a driving power of 5.5 kW for 30 minutes thereby grinding the mixture in the grinding container to give a pre-mixture. 5 g of the pre-mixture was put into an alumina-made crucible, then heated up to 1500°C in air in a boxy electric furnace at a heating rate of 300°C/hr, and kept at the temperature for 4 hours to be fired. Next, this was left cooled to room temperature to give a fired body. The BET specific surface area of the fired body was 0.38 $m^2$/g. The fired body was ground to give an aluminium titanate powder. The pore volume of the obtained aluminium titanate powder was 3.3 × $10^{-3}$ $cm^3$/g. The powder was analyzed through powder X-ray diffractiometry for the powdery diffraction spectrum, showing a crystal peak of aluminium magnesium titanate.

INDUSTRIAL APPLICABILITY

The aluminium titanate-based ceramics obtained according to the production process of the invention is favorably used, for example, for tools for firing furnaces such as crucibles, setters, saggers, refractories, etc; filters and catalyst carriers for use for exhaust gas purification in internal combustion engines such as diesel engines, gasoline engines, etc.; electronic components such as parts of power generators, substrates, capacitors and others, etc.

**Claims**

1.  A process for producing an aluminium titanate-based ceramics, comprising firing a particulate aluminium titanate-based ceramics.

2.  A process for producing an aluminium titanate-based ceramics, comprising shaping a particulate aluminium titanate-based ceramics to give a preform and firing the resulting preform.

3.  A process for producing an aluminium titanate-based ceramics, comprising mixing a particulate aluminium titanate-based ceramics with a titania source and an alumina source to be a pre-mixture, and firing the resulting pre-mixture.

4.  A process for producing an aluminium titanate-based ceramics, comprising mixing a particulate aluminium titanate-based ceramics with a titania source and an alumina source to be a pre-mixture, then molding the resulting pre-mixture to give a preform, and firing the resulting preform.

5.  The process for producing an aluminium titanate-based ceramics according to claim 3 or 4, wherein the particulate aluminium titanate-based ceramics is mixed with a titania source, an alumina source and a magnesia source to give the pre-mixture.

6.  The process for producing an aluminium titanate-based ceramics according to claim 3 or 4, wherein the particulate aluminium titanate-based ceramics is mixed with a titania source, an alumina source, a magnesia source and a silica source to give the pre-mixture.

7.  The process for producing an aluminium titanate-based ceramics according to claim 6, wherein the silica source is feldspar or glass frit.

8.  The process for producing an aluminium titanate-based ceramics according to any of claims 1 to 7, wherein the maximum particle size of the particulate aluminium titanate-based ceramics is at most 40 $\mu$m.

9.  The process for producing an aluminium titanate-based ceramics according to any of claims 1 to 8, wherein the particulate aluminium titanate-based ceramics contains magnesia and/or silica.

10. The process for producing an aluminium titanate-based ceramics according to any of claims 1 to 9, wherein the particulate aluminium titanate-based ceramics is an aluminium titanate-based ceramics having a value D50 of particle size distribution of at most 20 $\mu$m and a value D90 of at most 40 $\mu$m.

11. An aluminium titanate-based ceramics having a BET specific surface area of at most 0.4 m$^2$/g.

12. A process for producing a powder of aluminium titanate-based ceramics , comprising grinding the aluminium titanate-based ceramics obtained in the production process according to any of claims 1 to 10, or the aluminium titanate-based ceramics according to claim 11.

13. A powder of aluminium titanate-based ceramics having a pore volume of at most $3.0 \times 10^{-3}$ cm$^3$/g

## INTERNATIONAL SEARCH REPORT

| International application No. |
|---|
| PCT/JP2009/050041 |

A. CLASSIFICATION OF SUBJECT MATTER
*C01G23/00*(2006.01)i, *C04B35/443*(2006.01)i, *C04B35/46*(2006.01)i

According to International Patent Classification (IPC) or to both national classification and IPC

B. FIELDS SEARCHED

Minimum documentation searched (classification system followed by classification symbols)
C01G23/00, C04B35/443, C04B35/46

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-060240 A  (Tsutomu FUKUDA),<br>02 March, 1999 (02.03.99),<br>Claims 1, 2; Par. No. [0019]; example 1<br>& US 6197248 B1        & CA 2279809 A | 1,2,8-10,12 |
| X | JP 2001-139369 A  (Tsutomu FUKUDA),<br>22 May, 2001 (22.05.01),<br>Claims 1 to 5; example 1<br>& JP 3096814 B          & US 6403019 B1<br>& EP 1156023 A1         & DE 60013408 D<br>& DE 60013408 T         & CA 2325172 A<br>& TW 548254 B           & AT 275114 T<br>& KR 10-2001-0051471 A | 1,2,8-10,12 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 April, 2009 (02.04.09) | Date of mailing of the international search report<br>14 April, 2009 (14.04.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2009/050041 |

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 7-053281 A  (Harima Ceramic Co., Ltd.),<br>28 February, 1995 (28.02.95),<br>Claim 4; Par. No. [0018]<br>(Family: none) | 1,2,12<br>8-10 |

Form PCT/ISA/210 (continuation of second sheet) (April 2007)

**INTERNATIONAL SEARCH REPORT**

International application No.

PCT/JP2009/050041

| **Box No. II** | **Observations where certain claims were found unsearchable (Continuation of item 2 of first sheet)** |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| **Box No. III** | **Observations where unity of invention is lacking (Continuation of item 3 of first sheet)** |

This International Searching Authority found multiple inventions in this international application, as follows:
Claim 1 has the technical feature of "a process for the production of aluminum titanate-based ceramics, characterized by firing fine particles of an aluminum titanate-based ceramic", but the process is publicly known as disclosed in the following document.
Document 1: JP 7-053281 A (Harima Ceramic Co., Ltd.) 1995.02.28, [Claim 4], [0018] (Family: none)

Thus, claims 1-13 are classified into the following groups of inventions.
(continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1, 2, 8-10, 12

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2009/050041

Continuation of Box No.III of continuation of first sheet(2)

Main invention: claim 1, claim 2, and part of claims 8-10 and claim 12 referring to claim 2.

Second invention: claims 3-7, and part of claims 8-10 and claim 12 referring to claim 3.

Third invention: part of claim 8 referring to claim 1.

Fourth invention: part of claim 9 referring to claim 1.

Fifth invention: part of claim 10 referring to claim 1.

Sixth invention: part of claim 12 referring to claim 1.

Seventh invention: claim 11.

Eighth invention: claim 13.

Consequently, claims 1-13 involve 8 inventions.

Form PCT/ISA/210 (extra sheet) (April 2007)

**EP 2 241 536 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005105704 A